# EUROPEAN PATENT APPLICATION

(11) **EP 2 514 625 A2**
(43) Date of publication of application: **24.10.2012**
(21) Application number: 12164989.1
(22) Date of filing: 20.04.2012
(51) Int. Cl.: B60L 3/12, B60L 11/18

(54) **Method and system for authorizing the charging of an electric vehicle's batteries from a central location based on biometric identity information**

(30) Priority: 20.04.2011 US 201113090601
(71) Applicant: General Electric Company, Schenectady, NY 12345 (US)
(72) Inventor: Alexander, George William, Atlanta, GA 30339 (US); Boot, John Christopher, Atlanta, GA 30339 (US); Ree, Bradley Richard, Atlanta, GA 30339 (US)
(74) Representative: Picker, Madeline Margaret

(57) **Abstract**

Embodiments of the invention described herein use biometric information for authorizing charging an electric vehicle's (EV's) (102) batteries using one of a plurality of electric vehicle charging stations (EVCSs) (404) that are operably connected with a master station (502). In one aspect, a method of authorizing charging an EV's (102) batteries using an EVCS (404) is described. This embodiment of a method comprises storing, in a database, biometric identity information for one or more individuals (106); receiving, from a biometric information input device (108) located in a master station (502), input biometric identity information for a user (106); wherein the biometric information input device (108) is associated with a plurality of electric vehicle charging stations (EVCSs) (404); searching the database, using a processor, for biometric identity information for the one or more individuals (106) that substantially match the input biometric identity information for the user (106); and authorizing the user (106) to charge an electric vehicle's (EV's) (102) batteries using one of the plurality of EVCS (404) if the input biometric identity information for the user (106) substantially matches biometric identity information for at least one of the one or more individuals (106) in the database.

## Description

### BACKGROUND OF THE INVENTION

EVs (electric vehicles, which include PEVs (plug-in electric vehicles) and PHEVs (plug-in hybrid electric vehicles)) use batteries as a source of energy at least part of the time while in operation. These batteries discharge during use and are required to be recharged on an intermittent basis. In some instances, this charging occurs at charging stations away from the operator's home and away from any other location where an electric meter related to that party is found. Similar to gasoline stations, there is a cost associated with "re-fueling" the batteries at these charging stations. However, unlike with petroleum-based fuels, the costs associated with charging the batteries can be a few dollars or less, as compared to petroleum-based fuel costs of tens to hundreds of dollars for internal combustion engine powered vehicles. While credit cards may be a solution, the equipment for taking credit card charges is expensive to supply and maintain (requiring a network backhaul capability). Further, credit card charges are usually fixed fee plus a percentage of cost for sales of electricity. The credit card overhead associated with the cost to recharge a battery could be more than the charge for electricity used. Furthermore, it may be desired that a single authorization device be configured to enable EVs to be charged at a plurality of charging stations.

Therefore, systems and methods are desired that overcome challenges in the art, some of which are described above. Specifically, systems and methods of payment are desired that provide a way to identify a user of electrical energy used to charge an EV's batteries and accumulate costs associated with the charging to that individual for billing purposes.

### BRIEF DESCRIPTION OF THE INVENTION

Described herein are embodiments of systems and methods of authorizing charging an electric vehicle's (EV's) batteries using one of a plurality of electric vehicle charging stations (EVCSs) that are operably connected with a master station.

In one aspect, a method of authorizing charging an EV's batteries using a master station operably connected with a plurality of EVCS is described. This embodiment of a method comprises storing, in a database, biometric identity information for one or more individuals; receiving, from a biometric information input device located in a master station, input biometric identity information for a user; wherein the biometric information input device is associated with a plurality of electric vehicle charging stations (EVCSs); searching the database, using a processor, for biometric identity information for the one or more individuals that substantially match the input biometric identity information for the user; and authorizing the user to charge an electric vehicle's (EV's) batteries using the EVCS using one of the plurality of EVCS if the input biometric identity information for the user substantially matches biometric identity information for at least one of the one or more individuals in the database.

In another aspect, a system for charging an electric vehicle's batteries is described. This embodiment of a system comprises a master station and a plurality of electric vehicle charging stations (EVCS) operably connected with the master station. In one aspect, the master station is comprised of a biometric information input device, wherein the biometric information input device is associated with the plurality of electric vehicle charging stations (EVCSs); at least one memory device, wherein the memory device comprises a database residing thereon; an EVCS identity device, wherein a user can specify one of the plurality of EVCS for charging an electric vehicle's (EV's) batteries; and a processor operably connected with biometric information input device, EVCS identity device and the memory device, wherein the processor is configured to: store, in the database on the memory device, biometric identity information for one or more individuals; receive, from the biometric information input device, input biometric identity information for a user; receive, from the EVCS identity device, information that specifies one of the plurality of EVCS; search the database for biometric identity information for the one or more individuals that substantially match the input biometric identity information for the user; authorize the user to charge the EV's batteries using the specified one of the plurality of EVCS if the input biometric identity information for the user substantially matches biometric identity information for at least one of the one or more individuals in the database. Further comprising an embodiment of the system is a source of electrical energy, wherein the source of electrical energy can be connected to the EV for charging batteries of the EV, wherein each of the plurality of EVCS are comprised of a switch and a controller, wherein the switch can electrically connect or disconnect the source of electrical energy with the EV and the switch is controlled by the processor through the controller, and authorizing the user to charge the EV's batteries using the specified EVCS comprises the processor of the master station sending a signal to the controller of the specified EVCS that actuates the switch that electrically connects the source of electrical energy to the batteries of the EV.

In yet another aspect, a master station for an electric vehicle charging station system comprising a biometric information input device is described. This embodiment of a device is comprised of a biometric information input device; at least one memory device, wherein the memory device comprises a database residing thereon; an EVCS identity device, wherein a user can specify one of a plurality of EVCS operably connected with the master station for charging an electric vehicle's (EV's) batteries; a network interface; and a processor, wherein the processor is operably connected with the biometric information input device, the at least one memory device, the EVCS identity device, and the network interface, and wherein the processor is configured to: store, in the database on the memory device, biometric identity information for one or more individuals; receive, from the biometric information input device, input biometric identity information for a user; receive, from the EVCS identity device, information that specifies one of the plurality of EVCS; search the database for biometric identity information for the one or more individuals that substantially match the input biometric identity information for the user; authorize the user to charge the EV's batteries using the specified one of the plurality of EVCS if the input biometric identity information for the user substantially matches biometric identity information for at least one of the one or more individuals in the database, wherein authorizing the user to charge the EV's batteries using the specified one of the plurality of EVCS if the input biometric identity information for the user substantially matches biometric identity information for at least one of the one or more individuals in the database comprises actuating a switch in the specified one of the plurality of EVCS that electrically connects a source of electrical energy to the batteries of the EV; receive electrical consumption information related to the user charging the EV's batteries using the source of electrical energy; transmit the electrical consumption information over a network using the network interface to cause the user to be billed for the electrical consumption; and cause the switch in the specified one of the plurality of EVCS to electrically disconnect the electrical connection between the source of electrical energy and the EV's batteries when at least one of the following occurs: the batteries reach a predetermined level of charge, a defined period of time has elapsed, the user disconnects the electrical source of energy from the EV, a defined amount of electrical energy has been consumed by the batteries of the EV, or a predetermined cost is reached for the electrical energy consumed by the batteries of the EV.

Additional advantages will be set forth in part in the description which follows or may be learned by practice. The advantages will be realized and attained by means of the elements and combinations particularly pointed out in the appended claims. It is to be understood that both the foregoing general description and the following detailed description are by way of explanation and example only and are not restrictive, as claimed.

### BRIEF DESCRIPTION OF THE DRAWINGS

The accompanying drawings, which are incorporated in and constitute a part of this specification, illustrate embodiments and together with the description, serve to explain the principles of the methods and systems:
FIG. 1 is an overview illustration of one type of system that would benefit from embodiments of the present invention;
FIG. 2 is another overview illustration of one type of system that would benefit from embodiments of the present invention;
FIG. 3 illustrates another embodiment of an EVCS comprising a biometric information input device that can be used to obtain authorization for charging an EV's batteries using the EVCS;
FIG. 4 illustrates an embodiment of a system comprising a biometric information input device that can be used to obtain authorization for charging an EV's batteries using one of a plurality of EVCS;
FIG. 5 illustrates an embodiment of a master station comprising a biometric information input device that can be used to obtain authorization for charging an EV's batteries using one of the plurality of EVCS;
FIG. 6 illustrates another embodiment of a system comprising a master station associated with a biometric information input device that can be used to obtain authorization for charging an EV's batteries using one of the plurality of EVCS;
FIG. 7 illustrates a schematic block diagram of entities capable of operating as one of a plurality of EVCS and a master station in accordance with one embodiment of the present invention;
FIG. 8 is a flowchart illustrating a method of practicing an embodiment of the present invention; and
FIG. 9 is a block diagram illustrating an exemplary operating environment for performing the disclosed methods.

### DETAILED DESCRIPTION OF EMBODIMENTS OF THE INVENTION

Before the present methods and systems are disclosed and described, it is to be understood that the methods and systems are not limited to specific synthetic methods, specific components, or to particular compositions. It is also to be understood that the terminology used herein is for the purpose of describing particular embodiments only and is not intended to be limiting.

As used in the specification and the appended claims, the singular forms "a," "an" and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint. Further, when examples of ranges are provided herein, it is to be appreciated that the given ranges also include all subranges therebetween, unless specifically stated otherwise.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means "including but not limited to," and is not intended to exclude, for example, other additives, components, integers or steps. "Exemplary" means "an example of" and is not intended to convey an indication of a preferred or ideal embodiment. "Such as" is not used in a restrictive sense, but for explanatory purposes.

Disclosed are components that can be used to perform the disclosed methods and systems. These and other components are disclosed herein, and it is understood that when combinations, subsets, interactions, groups, etc. of these components are disclosed that while specific reference of each various individual and collective combinations and permutation of these may not be explicitly disclosed, each is specifically contemplated and described herein, for all methods and systems. This applies to all aspects of this application including, but not limited to, steps in disclosed methods. Thus, if there are a variety of additional steps that can be performed it is understood that each of these additional steps can be performed with any specific embodiment or combination of embodiments of the disclosed methods.

The present methods and systems may be understood more readily by reference to the following detailed description of preferred embodiments and the Examples included therein and to the Figures and their previous and following description.

EVs (electric vehicles, which include PEVs (plug-in electric vehicles) and PHEVs (plug-in hybrid electric vehicles)), require their batteries to be charged after use. In many instances, this charging occurs at charging stations away from the operator's home or other location where an electric meter related to that party is found. Similar to gasoline stations, there is a cost associated with "re-fueling" the batteries at these charging stations. However, unlike with petroleum based fuels, the costs associated with charging the batteries can be a few dollars or less as compared to fuel costs of tens to hundreds of dollars for internal combustion engine powered vehicles. In many instances, the transactional cost associated with using a credit card for payment of charging the batteries of an EV can be a significant percentage of the overall cost, or even exceed the cost to charge the EV.

Therefore, systems and methods are desired that provide authorization for the charging of an EV, and provide a way to accumulate costs for charging an EV that can be billed to a user. Because it may be more efficient to have a single authorization device associated with a plurality of electric vehicle charging station (EVCS), described herein are embodiments of systems and methods that use biometric identity information to obtain authorization to charge an EV using one of a plurality of EVCS that are operable connected with a master station comprising a biometric identity information device. In one aspect, costs associated with the charging are associated with a user, and the user is billed for the costs.

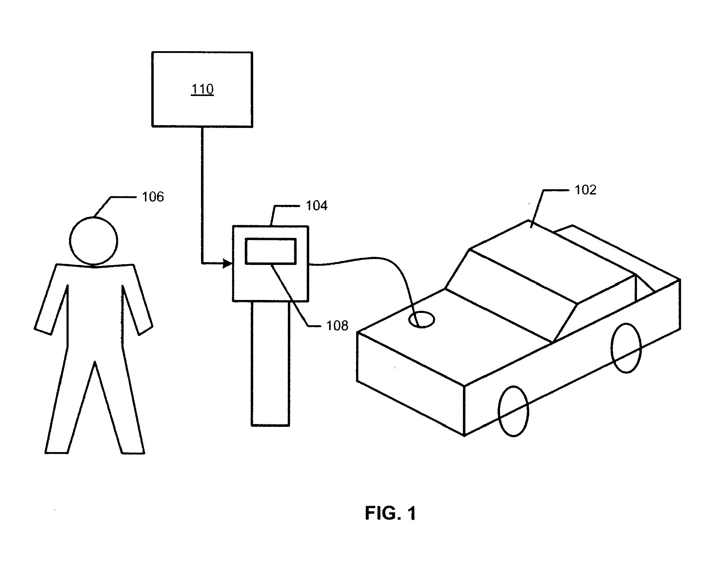

FIG. 1 is an overview illustration of one type of system that would benefit from embodiments of the present invention. As shown in FIG. 1, an EV 102 receives an electrical charge from an electric vehicle charging station (EVCS) 104, also referred to herein as a charging station. Analogous to a gasoline pump, EVCS 104 is used to re-charge the batteries of an EV 102. Although most EVs 102 can be recharged from a domestic wall socket, many support faster charging at higher voltages and currents that require dedicated equipment with a specialized connector. For example, SAE

International defines 240 Volt AC charging as level 2 charging, and 500 Volt DC high-current charging as level 3 charging. Owners can install a level 2 charging station at home, while businesses and local government provide level 2 and level 3 public charging stations that supply electricity for a fee. An example of a commercial charging station is the WattStation™ as available from General Electric Company ("GE"), Schenectady, NY.

Prior to charging an EV 102, a user 106 must be authorized to use the EVCS 104. For example, a user of an auto having a gasoline-fueled internal combustion engine cannot pump gasoline into the tank of the auto unless the user has pre-paid for the gasoline, or has obtained authorization using a credit card, debit card, or some other form of unique identification for the user. Similalry, a user 106 of an EVCS 104 must obtain authorization prior to charging the EV 102. Described herein are embodiments of systems, methods and devices for authorizing the charging of an electric vehicle's 102 batteries based on biometric identity information.

FIG. 1 illustrates an embodiment of an EVCS 104 comprising a biometric information input device 108 that can be used to obtain authorization for charging an EV's 102 batteries using the EVCS 104. The biometric information input device 108 can include, for example, one or more of a fingerprint reader, a palm reader, a hand geometry reader, a retinal scanner, an iris scanner, a voice recorder, a DNA reader, a face scanner, and the like. Further comprising the embodiment of a system shown in FIG. 1 is a memory device. In one aspect, the memory device can be included in the embodiment of an EVCS 104, as shown in FIG. 1, though it is also contemplated that the memory device can be external to or separate from the EVCS 104. Residing on the memory device is a database. In one aspect, the database comprises biometric identity information for users and potential users of the EVCS 104. The biometric identity information stored in the database can include, for example, one or more of fingerprint data, palm data, hand geometry data, retinal data, iris data, voice data, DNA information, face recognition data, and the like for the one or more individuals. In one aspect, the DNA reader can read DNA information from a DNA card, as known to one of ordinary skill in the art. Further comprising the system of FIG. 1 is a source of electrical energy 110 and a processor operably connected with the biometric information input device 108 and the memory device. In one aspect, the processor is contained within the EVCS 104. In another aspect, the processor is separate from the EVCS 104. The processor, regardless of location, is configured to store, in the database on the memory device, biometric identity information for one or more individuals; receive, from the biometric information input device 108, input biometric identity information for a user 106; search the database for biometric identity information for the one or more individuals that substantially match the input biometric identity information for the user 106; and authorize the user 106 to charge the EV's 102 batteries using the source of electrical energy 110 if the input biometric identity information for the user 106 substantially matches biometric identity information for at least one of the one or more individuals in the database. If the input biometric identity information does not substantially match biometric identity information for the one or more individuals stored in the database, then the user 106 is not allowed to charge the EV's 102 batteries using the EVCS 104. Substantially matching input biometric identity information for the user 106 with biometric identity information for at least one of the one or more individuals in the database means, in one aspect, that the input biometric identity information for the user 106 is more likely than not to be the biometric identity information for at least one of the one or more individuals in the database. In one aspect, a percentage likelihood can be assigned to the matching. For example, it may be determined through matching techniques (e.g., matching an input fingerprint to a fingerprint stored in the database) that the input biometric identity information for the user has a greater than 50 percent likelihood of being the biometric identity information for at least one of the one or more individuals in the database. The percentage likelihood can be set by the system. For example, embodiments of the system may require that the input biometric identity information for the user has a 51 percent, 55 percent, 60 percent, 70 percent, 75 percent, etc. likelihood of being the biometric identity information for at least one of the one or more individuals in the database.

In one aspect, the processor is further configured to receive electrical consumption information related to the user 106 charging the EV's 102 batteries using the source of electrical energy 110; and use the electrical consumption information to cause the user 106 to be billed for the electrical consumption. In one aspect, using the electrical consumption information to cause the user 106 to be billed for the electrical consumption comprises the processor transferring at least a part of the electrical consumption information to a third party and including a cost for the electrical consumption on a third-party invoice. In one aspect, including the cost for the electrical consumption on a third-party invoice includes including the cost on one of an invoice for electricity, water, gas, cable television, Internet service, telephone service, and the like. As noted above, in one aspect the processor can be separate from the EVCS 104. In such an instance, the system can further comprise a network (not shown in FIG. 1). The network can be wired (including fiber optic), wireless, or a combination of wired and wireless using protocols known to one of ordinary skill in the art. If the processor is separate from the EVCS 104, then searching the database, using the processor, for biometric identity information for the one or more individuals that match the input biometric identity information for the user 106 comprises searching the database using the processor that is separate from the EVCS 104, wherein the input biometric identity information is transferred to the processor over the network.

In one aspect, an embodiment of the system further comprises a switch (not shown in FIG. 1). The switch can electrically connect or disconnect the source of electrical energy 110 with the EV 102. In one aspect, the switch can be controlled by the processor. Therefore, in such an embodiment, authorizing the user 106 to charge the EV's 102 batteries using the source of electrical energy 110 if the input biometric identity information for the user 106 substantially matches biometric identity information for at least one of the one or more individuals in the database comprises actuating the switch that electrically connects the source of electrical energy 110 to the batteries of the EV 102. If there is no match between the user's 106 input biometric identity information and biometric identity information for at least one of the one or more individuals in the database, then the switch does not electrically connect the source of electrical energy 110 to the batteries of the EV 102. In one aspect, the processor is configured to cause the switch to electrically disconnect the electrical connection between the source of electrical energy and the EV's 102 batteries when at least one of the following occurs: the batteries reach a predetermined level of charge, a defined period of time has elapsed, the user disconnects the electrical source of energy from the EV, a defined amount of electrical energy has been consumed by the batteries of the EV 102, or a predetermined cost is reached for the electrical energy consumed by the batteries of the EV 102.

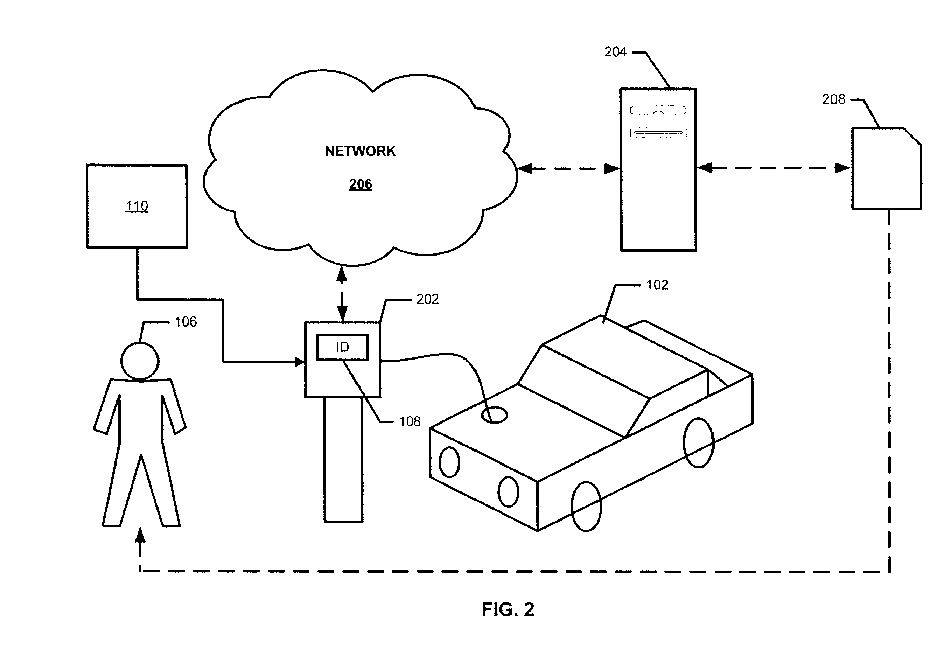

FIG. 2 is an overview illustration of another type of system that would benefit from embodiments of the present invention. As shown in FIG. 2, an EV 102 receives an electrical charge from EVCS 202, also referred to herein as a charging station. As described in regard to FIG. 1, prior to charging an EV 102, a user 106 must be authorized to use the EVCS 202.

FIG. 2 illustrates an embodiment of an EVCS 202 comprising a biometric information input device 108 that can be used to obtain authorization for charging an EV's 102 batteries using the EVCS 202. The biometric information input device 108 can include, for example, one or more of a fingerprint reader, a palm reader, a hand geometry reader, a retinal scanner, an iris scanner, a voice recorder, a DNA reader, a face scanner, and the like. Further comprising the embodiment of a system shown in FIG. 2 is a memory device. As shown in FIG. 2, the memory device is included in a computing device 204 separate from the EVCS 202. Residing on the memory device is a database. In one aspect, the database comprises biometric identity information for users and potential users of the EVCS 202. The biometric identity information stored in the database can include, for example, one or more of fingerprint data, palm data, hand geometry data, retinal data, iris data, voice data, DNA information, face recognition data, and the like for the one or more individuals. In one aspect, the DNA reader can read DNA information from a DNA card, as known to one of ordinary skill in the art. Further comprising the system of FIG. 2 is a source of electrical energy 110 and a processor operably connected with biometric information input device 108 and the memory device. In the embodiment shown in FIG. 2, the processor is separate from the EVCS 202 and is included in the computing device 204. The EVCS 202, therefore, further includes a network interface (not shown in FIG. 1) for interfacing the EVCS 202 with a network 206. The network can be wired (including fiber optic), wireless, or a combination of wired and wireless using protocols known to one of ordinary skill in the art. In FIG. 2, the processor included in the computing device 204 is configured to store, in the database on the memory device, biometric identity information for one or more individuals; receive over a network 206, from the biometric information input device 108, input biometric identity information for a user 106; search the database for biometric identity information for the one or more individuals that substantially match the input biometric identity information for the user 106; and authorize the user 106 to charge the EV's 102 batteries using the source of electrical energy 110 if the input biometric identity information for the user 106 substantially matches biometric identity information for at least one of the one or more individuals in the database. If the input biometric identity information does not substantially match biometric identity information for the one or more individuals stored in the database, then the user 106 is not allowed to charge the EV's 102 batteries using the EVCS 202.

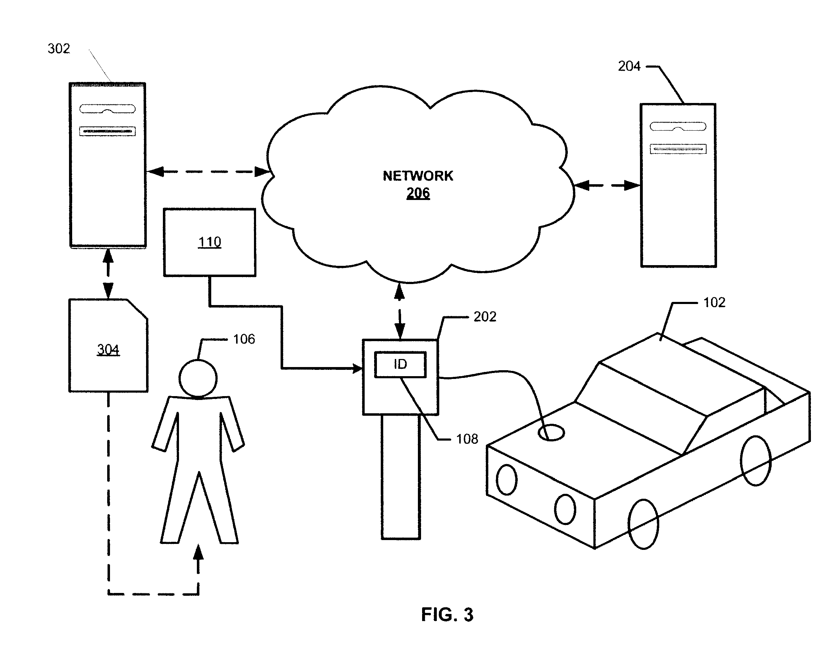

In one aspect, the processor is further configured to receive, over the network 206, electrical consumption information related to the user 106 charging the EV's 102 batteries using the source of electrical energy 110; and use the electrical consumption information to cause the user 106 to be billed for the electrical consumption through use of an invoice 208. FIG. 3 illustrates another embodiment of an EVCS 202 comprising a biometric information input device 108 that can be used to obtain authorization for charging an EV's 102 batteries using the EVCS 202. As shown in FIG. 3, using the electrical consumption information to cause the user 106 to be billed for the electrical consumption comprises the processor of computing device 204 transferring at least a part of the electrical consumption information to a third party 302 and including a cost for the electrical consumption on a third-party invoice 304. In one aspect, including the cost for the electrical consumption on a third-party invoice 304 includes including the cost on one of an invoice 304 for electricity, water, gas, cable television, Internet service, telephone service, and the like. In one aspect, the electrical consumption information can be transferred over the network 206 from computing device 204 to third-party 302.

In one aspect, an embodiment of the system further comprises a switch (not shown in FIGS. 2 and 3). The switch can electrically connect or disconnect the source of electrical energy 110 with the EV 102. In one aspect, the switch can be controlled by the processor of the computing device 204. Therefore, in such an embodiment, authorizing the user 106 to charge the EV's 102 batteries using the source of electrical energy 110 if the input biometric identity information for the user 106 substantially matches biometric identity information for at least one of the one or more individuals in the database comprises actuating the switch that electrically connects the source of electrical energy 110 to the batteries of the EV 102. If there is no match between the user's 106 input biometric identity information and biometric identity information for at least one of the one or more individuals in the database, then the switch does not electrically connect the source of electrical energy 110 to the batteries of the EV 102. In one aspect, the processor is configured to cause the switch to electrically disconnect the electrical connection between the source of electrical energy 110 and the EV's 102 batteries when at least one of the following occurs: the batteries reach a predetermined level of charge, a defined period of time has elapsed, the user disconnects the electrical source of energy 110 from the EV 102, a defined amount of electrical energy has been consumed by the batteries of the EV 102, or a predetermined cost is reached for the electrical energy consumed by the batteries of the EV 102.

Therefore, FIGS. 2 and 3 illustrate embodiments of a system that comprises an electric vehicle charging station (EVCS) 202 that can be comprised of a biometric information input device 108; at least one memory device, wherein the memory device comprises a database residing thereon; an electrical switch, wherein the switch can electrically connect or disconnect a source of electrical energy 110 with an electric vehicle (EV) 102 for charging batteries of the EV 102; a network interface; and a processor. The processor is operably connected with biometric information input device 108, the at least one memory device, the electrical switch and the network interface, and, in one aspect, the processor is configured to store, in the database on the memory device, biometric identity information for one or more individuals; receive over a network 206, from the biometric information input device 108, input biometric identity information for a user 106; search the database for biometric identity information for the one or more individuals that substantially match the input biometric identity information for the user 106; authorize the user to charge the EV's 102 batteries using the source of electrical energy 110 if the input biometric identity information for the user 106 substantially matches biometric identity information for at least one of the one or more individuals in the database, wherein authorizing the user to charge the EV's batteries using the source of electrical energy 110 if the input biometric identity information for the user 106 substantially matches biometric identity information for at least one of the one or more individuals in the database comprises actuating the switch that electrically connects the source of electrical energy to the batteries of the EV 102; receive electrical consumption information related to the user 106 charging the EV's 102 batteries using the source of electrical energy 110; transmit the electrical consumption information over the network 206 using the network interface to cause the user 106 to be billed for the electrical consumption; and cause the switch to electrically disconnect the electrical connection between the source of electrical energy 110 and the EV's 102 batteries when at least one of the following occurs: the batteries reach a predetermined level of charge, a defined period of time has elapsed, the user 106 disconnects the electrical source of energy 110 from the EV 102, a defined amount of electrical energy has been consumed by the batteries of the EV 102, or a predetermined cost is reached for the electrical energy consumed by the batteries of the EV 102.

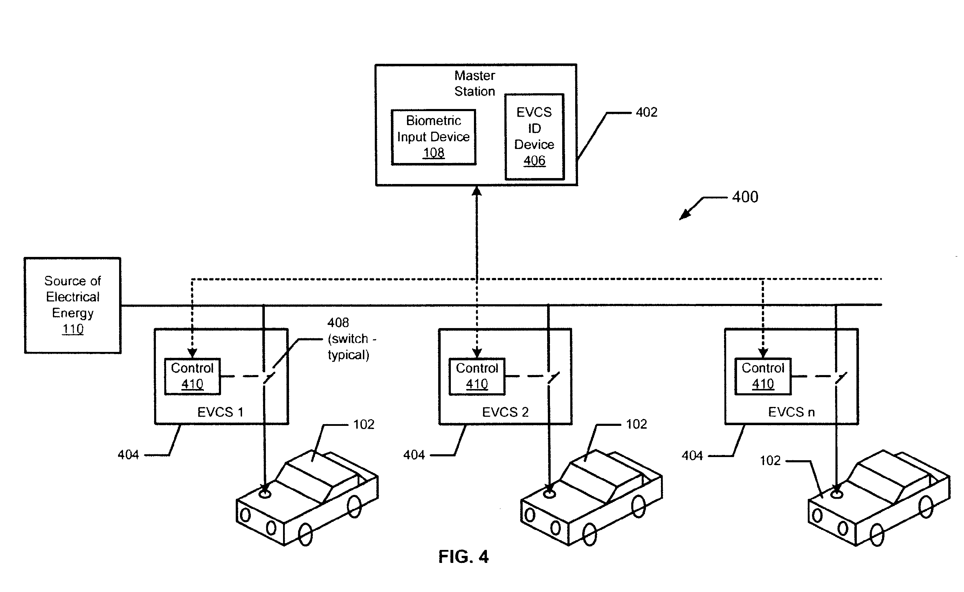

FIG. 4 is an embodiment of a system that would benefit from embodiments of the present invention. As shown in FIG. 4, an EV 102 receives an electrical charge from one of a plurality of electric vehicle charging station (EVCSs) 404.

FIG. 4 illustrates an embodiment of a system 400 comprising a biometric information input device 108 that can be used to obtain authorization for charging an EV's 102 batteries using one of a plurality of EVCS 404. As shown in FIG. 4, a master station 402 can be comprised of at least a biometric information input device 108 and an information input device 406 such as a keypad, touch-screen, card-reader and the like (i.e., an EVCS identity device). The biometric information input device 108 can include, for example, one or more of a fingerprint reader, a palm reader, a hand geometry reader, a retinal scanner, an iris scanner, a voice recorder, a DNA reader, a face scanner, and the like. Further comprising the embodiment of a system shown in FIG. 4 is a memory device. In one aspect, the memory device can be included in the embodiment of a master station 402, as shown in FIG. 4, though it is also contemplated that the memory device can be external to or separate from the master station 402. Residing on the memory device is a database. In one aspect, the database comprises biometric identity information for users and potential users of the system 400. The biometric identity information stored in the database can include, for example, one or more of fingerprint data, palm data, hand geometry data, retinal data, iris data, voice data, DNA information, face recognition data, and the like for the one or more individuals. In one aspect, the DNA reader can read DNA information from a DNA card, as known to one of ordinary skill in the art. Further comprising the system of FIG. 4 is a source of electrical energy 110 and a processor operably connected with the biometric information input device 108, the EVCS identity device 406, and the memory device. In one aspect, the processor is contained within the master station 402. In another aspect, the processor is separate from the master station 402. The processor, regardless of location, is configured to store, in the database on the memory device, biometric identity information for one or more individuals; receive, from the biometric information input device 108, input biometric identity information for a user 106; receive, from the EVCS identity device 406, information that specifies one of the plurality of EVCS 404; search the database for biometric identity information for the one or more individuals that substantially match the input biometric identity information for the user 106; and authorize the user 106 to charge the EV's 102 batteries using the source of electrical energy 110 through the specified one of the plurality of EVCS 404 if the input biometric identity information for the user 106 substantially matches biometric identity information for at least one of the one or more individuals in the database. If the input biometric identity information does not substantially match biometric identity information for the one or more individuals stored in the database, then the user 106 is not allowed to charge the EV's 102 batteries using one of the plurality of EVCS 404.

In one aspect, the processor is further configured to receive electrical consumption information related to the user 106 charging the EV's 102 batteries using the source of electrical energy 110; and use the electrical consumption information to cause the user 106 to be billed for the electrical consumption. In one aspect, using the electrical consumption information to cause the user 106 to be billed for the electrical consumption comprises the processor transferring at least a part of the electrical consumption information to a third party and including a cost for the electrical consumption on a third-party invoice. In one aspect, including the cost for the electrical consumption on a third-party invoice includes including the cost on one of an invoice for electricity, water, gas, cable television, Internet service, telephone service, and the like. As noted above, in one aspect the processor can be separate from the master station 402. In such an instance, the system can further comprise a network (not shown in FIG. 4). The network can be wired (including fiber optic), wireless, or a combination of wired and wireless using protocols known to one of ordinary skill in the art. If the processor is separate from the master station 402, then searching the database, using the processor, for biometric identity information for the one or more individuals that match the input biometric identity information for the user 106 comprises searching the database using the processor that is separate from the master station 402, wherein the input biometric identity information is transferred to the processor over the network.

In one aspect, an embodiment of the system further comprises a switch 408 located in each of the plurality of EVCS 404. The switch 408 can electrically connect or disconnect the source of electrical energy 110 with the EV 102. In one aspect, the switch can be controlled by the processor through a controller 410 located in each of the plurality of EVCS 404. In one aspect, the controller 410 can be comprised of relays. The processor can be operably connected with the plurality of EVCS 404, and the controller 410 of each EVCS through wires (including fiber optic), wirelessly or through a network (that can be wired (including fiber optic), wireless or a combination of wired and wireless using protocols known to one of ordinary skill in the art). Therefore, in such an embodiment, authorizing the user 106 to charge the EV's 102 batteries using the source of electrical energy 110 if the input biometric identity information for the user 106 substantially matches biometric identity information for at least one of the one or more individuals in the database comprises actuating, using the controller 410, the switch 408 in the specified one of the plurality of EVCS 404 that electrically connects the source of electrical energy 110 to the batteries of the EV 102. If there is no match between the user's 106 input biometric identity information and biometric identity information for at least one of the one or more individuals in the database, then the switch 408 does not electrically connect the source of electrical energy 110 to the batteries of the EV 102. In one aspect, the processor is configured to cause the switch 408 to electrically disconnect, using the controller 410, the electrical connection between the source of electrical energy 110 and the EV's 102 batteries when at least one of the following occurs: the batteries reach a predetermined level of charge, a defined period of time has elapsed, the user disconnects the electrical source of energy from the EV, a defined amount of electrical energy has been consumed by the batteries of the EV 102, or a predetermined cost is reached for the electrical energy consumed by the batteries of the EV 102.

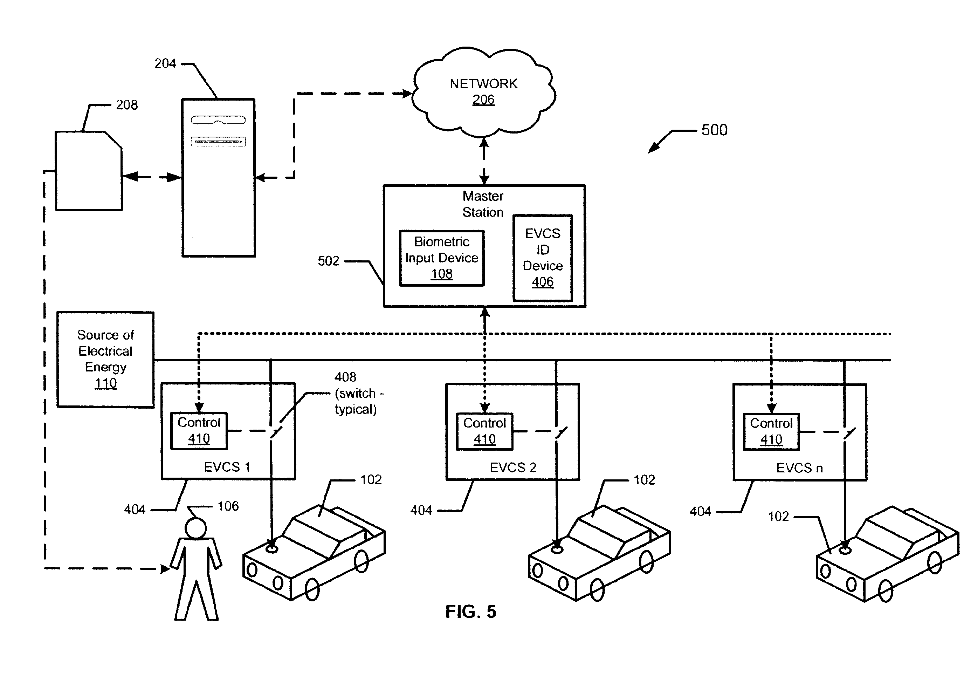

FIG. 5 is an overview illustration of another type of system that would benefit from embodiments of the present invention. As shown in FIG. 5, an EV 102 receives an electrical charge from one of a plurality of EVCS 404, also referred to herein as a charging station. As described herein, prior to charging an EV 102, a user 106 must be authorized to use one of the plurality of EVCS 404.

FIG. 5 illustrates an embodiment of a master station 502 comprising a biometric information input device 108 that can be used to obtain authorization for charging an EV's 102 batteries using one of the plurality of EVCS 404. The biometric information input device 108 can include, for example, one or more of a fingerprint reader, a palm reader, a hand geometry reader, a retinal scanner, an iris scanner, a voice recorder, a DNA reader, a face scanner, and the like. Further comprising the embodiment of a system shown in FIG. 5 is a memory device. As shown in FIG. 5, the memory device is included in a computing device 204 separate from the master station 502. Residing on the memory device is a database. In one aspect, the database comprises biometric identity information for users and potential users of the system 500. The biometric identity information stored in the database can include, for example, one or more of fingerprint data, palm data, hand geometry data, retinal data, iris data, voice data, DNA information, face recognition data, and the like for the one or more individuals. In one aspect, the DNA reader can read DNA information from a DNA card, as known to one of ordinary skill in the art. Further comprising the system of FIG. 5 is a source of electrical energy 110 and a processor operably connected with biometric information input device 108 and the memory device. In the embodiment shown in FIG. 5, the processor is separate from the master station 502 and is included in the computing device 204. The master station 502, therefore, further includes a network interface (not shown in FIG. 5) for interfacing the master station 502 with a network 206. The network can be wired (including fiber optic), wireless, or a combination of wired and wireless using protocols known to one of ordinary skill in the art. In FIG. 5, the processor included in the computing device 204 is configured to store, in the database on the memory device, biometric identity information for one or more individuals; receive over a network 206, from the biometric information input device 108, input biometric identity information for a user 106; search the database for biometric identity information for the one or more individuals that substantially match the input biometric identity information for the user 106; and authorize the user 106 to charge the EV's 102 batteries using the source of electrical energy 110 and one of the plurality of EVCS 404 if the input biometric identity information for the user 106 substantially matches biometric identity information for at least one of the one or more individuals in the database. If the input biometric identity information does not substantially match biometric identity information for the one or more individuals stored in the database, then the user 106 is not allowed to charge the EV's 102 batteries using one of the plurality of EVCS 404.

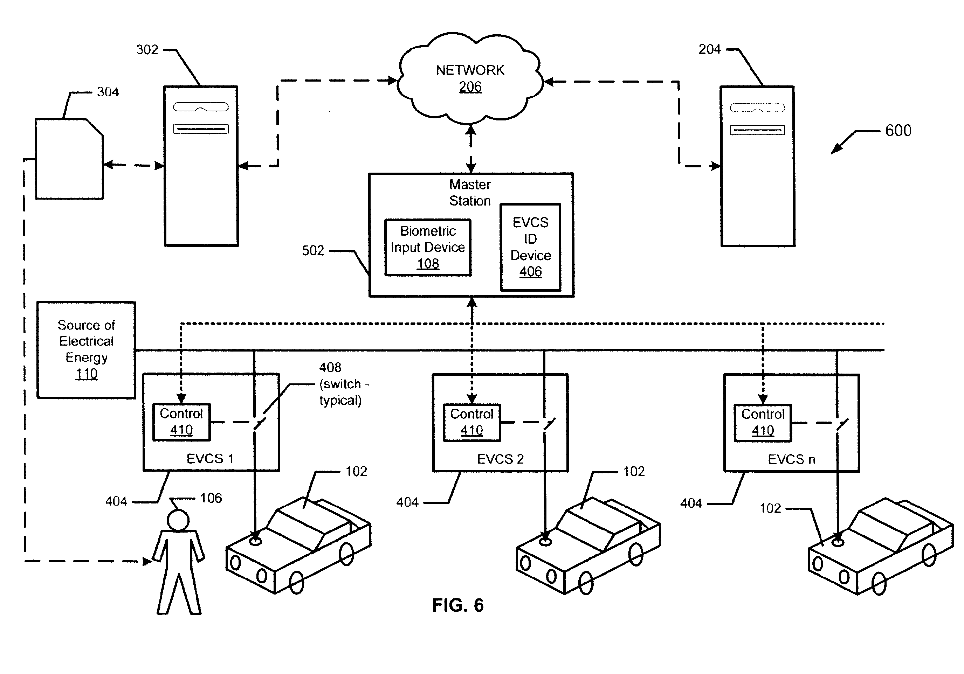

In one aspect, the processor is further configured to receive, over the network 206, electrical consumption information related to the user 106 charging the EV's 102 batteries using the source of electrical energy 110 and one of the plurality of EVCS 404; and use the electrical consumption information to cause the user 106 to be billed for the electrical consumption through use of an invoice 208. FIG. 6 illustrates another embodiment of a system 600 comprising a master station 502 associated with a biometric information input device 108 that can be used to obtain authorization for charging an EV's 102 batteries using one of the plurality of EVCS 404. As shown in FIG. 6, using the electrical consumption information to cause the user 106 to be billed for the electrical consumption comprises the processor of computing device 204 transferring at least a part of the electrical consumption information to a third party 302 and including a cost for the electrical consumption on a third-party invoice 304. In one aspect, including the cost for the electrical consumption on a third-party invoice 304 includes including the cost on one of an invoice 304 for electricity, water, gas, cable television, Internet service, telephone service, and the like. In one aspect, the electrical consumption information can be transferred over the network 206 from computing device 204 to third-party 302.

Therefore, FIGS. 5 and 6 illustrate embodiments of a master station 502 for an electric vehicle charging station (EVCS) system that can be comprised of a biometric information input device 108; at least one memory device, wherein the memory device comprises a database residing thereon; an EVCS identity device 406, wherein a user can specify one of a plurality of EVCS 404 operably connected with the master station 502 for charging an electric vehicle's (EV's) 102 batteries; a network interface; and a processor. The processor is operably connected with biometric information input device 108, the at least one memory device, the EVCS identity device 406 and the network interface, and, in one aspect, the processor is configured to store, in the database on the memory device, biometric identity information for one or more individuals; receive over a network 206, from the biometric information input device 108, input biometric identity information for a user 106; receive, from the EVCS identity device 406, information that specifies one of the plurality of EVCS 404; search the database for biometric identity information for the one or more individuals that substantially match the input biometric identity information for the user 106; authorize the user 106 to charge the EV's 102 batteries using the specified one of the plurality of EVCS 404 if the input biometric identity information for the user 106 substantially matches biometric identity information for at least one of the one or more individuals in the database, wherein authorizing the user to charge the EV's 102 batteries using the specified one of the plurality of EVCS 404 if the input biometric identity information for the user substantially matches biometric identity information for at least one of the one or more individuals in the database comprises actuating a switch 408 in the specified one of the plurality of EVCS 404 that electrically connects a source of electrical energy 110 to the batteries of the EV 102; receive electrical consumption information related to the user 106 charging the EV's 102 batteries using the source of electrical energy 110; transmit the electrical consumption information over the network 206 using the network interface to cause the user 106 to be billed for the electrical consumption; and cause the switch 408 in the specified one of the plurality of EVCS 404 to electrically disconnect the electrical connection between the source of electrical energy 110 and the EV's 102 batteries when at least one of the following occurs: the batteries reach a predetermined level of charge, a defined period of time has elapsed, the user disconnects the electrical source of energy from the EV, a defined amount of electrical energy has been consumed by the batteries of the EV, or a predetermined cost is reached for the electrical energy consumed by the batteries of the EV.

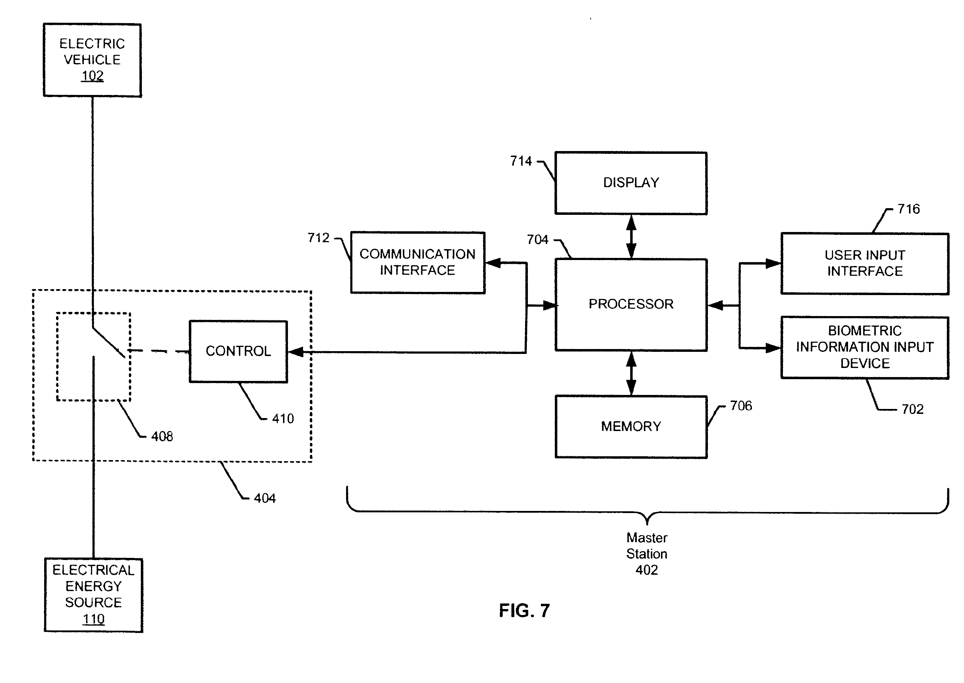

Referring now to FIG. 7, a schematic block diagram of entities capable of operating as one of a plurality of EVCS 404 and a master station 402 are shown in accordance with one embodiment of the present invention. The entities capable of operating as one of a plurality of EVCS 404 and a master station 402 include various means for performing one or more functions in accordance with embodiments of the present invention, including those more particularly shown and described herein. It should be understood, however, that one or more of the entities may include alternative means for performing one or more like functions, without departing from the spirit and scope of the present invention. As shown, the entity capable of operating as a master station 402 can generally include means, such as one or more processors 704 for performing or controlling the various functions of the entity. In one aspect, the one or more processors can be, for example, one or more of a NEC v850 family microprocessor (NEC Corporation, Tokyo, Japan) and/or a Teridian 6533 controller or a Teridian 6521 controller as are available from Maxim Integrated Products, Inc. (Sunnyvale, California), among others. As shown in FIG. 7, in one embodiment, master station 402 can comprise a biometric information input device 702. In various aspects, the biometric information input device 702 can comprise one or more of a fingerprint reader, a palm reader, a hand geometry reader, a retinal scanner, an iris scanner, a voice recorder, a DNA reader, a face scanner, and the like as are known to one of ordinary skill in the art. Further comprising this embodiment of a master station 402 are one or more processors 704 and memory 706.

In one embodiment, the one or more processors 704 are in communication with or include memory 706, such as volatile and/or non-volatile memory that stores content, data or the like. For example, the memory 706 may store content transmitted from, and/or received by, the entity. Also for example, the memory 706 may store software applications, instructions or the like for the one or more processors 704 to perform steps associated with operation of the entity in accordance with embodiments of the present invention. In particular, the one or more processors 704 may be configured to perform the processes discussed in more detail herein for storing, in a database on the memory 706, biometric identity information for one or more individuals; receiving, from the biometric information input device 702, input biometric identity information for a user, wherein the biometric information input device is associated with a plurality of electric vehicle charging stations (EVCSs) 404; searching the database for biometric identity information for the one or more individuals that substantially match the input biometric identity information for the user; authorizing the user to charge an electric vehicle's 102 (EV's) batteries using one of the plurality of EVCS 404 if the input biometric identity information for the user substantially matches biometric identity information for at least one of the one or more individuals in the database. In one aspect, authorizing the user to charge the EV's 102 batteries using one of the plurality of EVCS 404 if the input biometric identity information for the user substantially matches biometric identity information for at least one of the one or more individuals in the database comprises using a control device 410 to actuate a switch 408 that electrically connects the source of electrical energy 110 to the batteries of the EV 102.

In one aspect, the processor 704 is configured to receive electrical consumption information related to the user charging the EV's 102 batteries using the source of electrical energy 110; transmit the electrical consumption information over a network using an optional network interface 712 to cause the user to be billed for the electrical consumption; and cause the switch 408 of the specified one of the plurality of EVCS 404 to electrically disconnect the electrical connection between the source of electrical energy 110 and the EV's 102 batteries when at least one of the following occurs: the batteries reach a predetermined level of charge, a defined period of time has elapsed, the user disconnects the electrical source of energy from the EV 102, a defined amount of electrical energy has been consumed by the batteries of the EV 102, or a predetermined cost is reached for the electrical energy consumed by the batteries of the EV 102.

In addition to the memory 706, the one or more processors 704 can also be connected to at least one interface or other means for displaying, transmitting and/or receiving data, content or the like. In this regard, the interface(s) can optionally include at least one communication interface 712 or other means for transmitting and/or receiving data, content or the like, as well as at least one user interface that can include a display 714 and/or a user input interface 716. In one aspect, the optional communication interface 712 can be used to transfer data or receive commands from and transfer information to a remote computing device 204 such as the one described herein over a network 206. In one aspect, the network 206 can be an advanced metering infrastructure (AMI) network. AMI refers to systems that measure, collect and analyze energy usage, and interact with advanced devices such as electricity meters, gas meters, water meters, EVCS and the like through various communication media either on request (on-demand) or on pre-defined schedules. This infrastructure includes hardware, software, communications, consumer energy displays and controllers, customer associated systems, meter data management (MDM) software, supplier and network distribution business systems, and the like. The network 206 between the integrated meters and master station 404 and business systems allows collection and distribution of information to customers, suppliers, utility companies and service providers. This enables these businesses to either participate in, or provide, demand response solutions, products and services. By providing information to customers, the system assists a change in energy usage from their normal consumption patterns, either in response to changes in price or as incentives designed to encourage lower energy usage use at times of peak-demand periods or higher wholesale prices or during periods of low operational systems reliability. In one aspect, the network 206 comprises at least a portion of a smart grid network. In one aspect, the network 206 utilizes one or more of one or more of a WPAN (e.g., ZigBee, Bluetooth), LAN/WLAN (e.g., 802.11n, microwave, laser, etc.), WMAN (e.g., WiMAX, etc.), WAN/WWAN (e.g., UMTS, GPRS, EDGE, CDMA, GSM, CDPD, Mobitex, HSDPA, HSUPA, 3G, etc.), RS232, USB, Firewire, Ethernet, wireless USB, cellular, OpenHAN, power line carrier (PLC), broadband over power lines (BPL), and the like. In one aspect, the communication interface 712 can comprise a wireless communication interface such as a Wi-Fi transceiver. The user input interface 716, in turn, can comprise any of a number of devices allowing the entity to receive data from a user, such as a keypad, a touch display, a joystick or other input device.

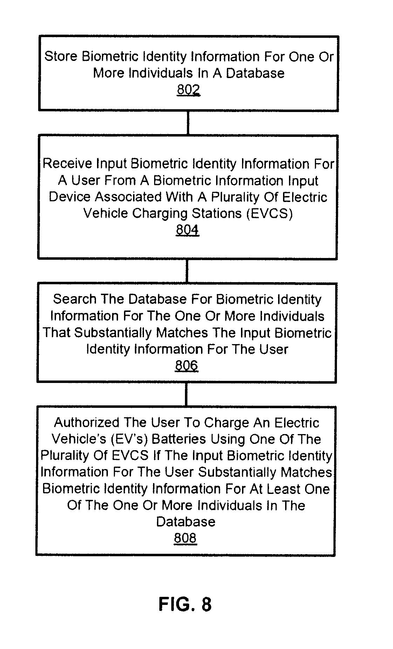

FIG. 8 is a flowchart illustrating a method of practicing an embodiment of the present invention. The described method comprises an embodiment of a method of authorizing charging an electric vehicle's (EV's) batteries using an electric vehicle charging station (EVCS). At step 802, biometric identity information for one or more individuals is stored in a database. In one aspect, storing, in the database, biometric identity information for one or more individuals comprises storing the biometric identity information in the database in a memory device located within the master station. In one aspect, storing, in the database, biometric identity information for one or more individuals comprises storing biometric identity information in the database in a memory device located separate from the master station. In one aspect, storing, in the database, biometric identity information for one or more individuals comprises storing in the database one or more of fingerprint data, palm data, hand geometry data, retinal data, iris data, voice data, DNA information, face recognition data, and the like for the one or more individuals.

At step 804, input biometric identity information for a user is received from a biometric information input device associated with a plurality of electric vehicle charging stations (EVCS). In one aspect, receiving, from the biometric information input device associated with the plurality of EVCS, input biometric identity information for a user, comprises receiving the input biometric identity information for the user from one or more of a fingerprint reader, a palm reader, a hand geometry reader, a retinal scanner, an iris scanner, a voice recorder, a DNA reader, a face scanner, and the like. In one aspect, the DNA reader can read DNA information from a DNA card. In one aspect, receiving, from the biometric information input device associated with the plurality of EVCS, input biometric identity information for the user comprises receiving from the biometric information input device one or more of fingerprint data, palm data, hand geometry data, retinal data, iris data, voice data, DNA information, face recognition data, and the like for the user.

At step 806, the database is searched, using a processor, for biometric identity information for the one or more individuals that substantially matches the input biometric identity information for the user. In one aspect, searching the database, using the processor, for biometric identity information for the one or more individuals that substantially match the input biometric identity information for the user comprises searching the database using the processor located within the master station. In one aspect, searching the database, using the processor, for biometric identity information for the one or more individuals that matches the input biometric identity information for the user comprises searching the database using the processor that is separate from the master station, wherein the input biometric identity information is transferred to the processor over a network.

At step 808, the user is authorized to charge an electric vehicle's (EV's) batteries using one of the plurality of EVCS if the input biometric identity information for the user substantially matches biometric identity information for at least one of the one or more individuals in the database. In one aspect, authorizing the user to charge the electric vehicle's (EV's) batteries using one of the plurality of EVCS if the input biometric identity information for the user substantially matches biometric identity information for at least one of the one or more individuals in the database comprises actuating a switch in one of the plurality of EVCS that electrically connects the specified EVCS to the batteries of the EV. In one aspect, the switch disconnects the electrical connection between the one of the plurality of EVCS and the EV when at least one of the batteries reach a predetermined level of charge, a defined period of time has elapsed, the user disconnects the EVCS from the EV, a defined amount of electrical energy has been consumed by the batteries of the EV, or a predetermined cost is reached for the electrical energy consumed by the batteries of the EV.

In one aspect, an embodiment of the method can further comprise receiving electrical consumption information related to the user charging the EV's batteries using the one of the plurality of EVCS; and billing the user for the electrical consumption. In one aspect, billing the user for the electrical consumption comprises including a cost for the electrical consumption on a third-party invoice. In one aspect, including the cost for the electrical consumption on a third-party invoice includes including the cost on one of an invoice for electricity, water, gas, cable television, Internet service; or telephone service.

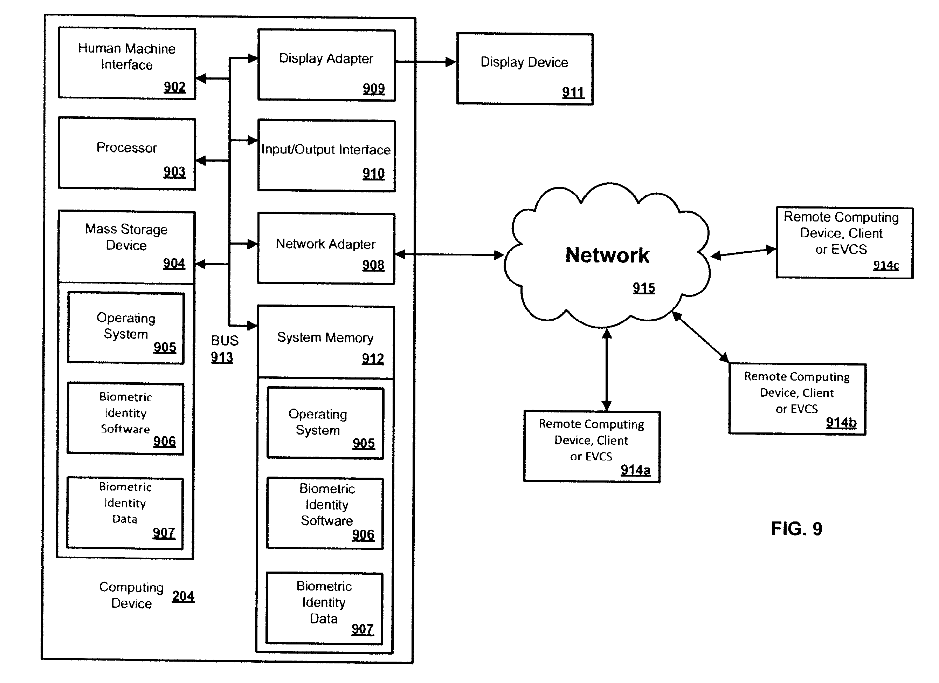

The above system has been described above as comprised of units. One skilled in the art will appreciate that this is a functional description and that software, hardware, or a combination of software and hardware can perform the respective functions. A unit, such as the master station 402, 502, the network 206, the computing device 204, etc., can be software, hardware, or a combination of software and hardware. The units can comprise the biometric identity software 906 as illustrated in FIG. 9 and described below. Reference is now made to FIG. 9, which illustrates one type of electronic device that would benefit from embodiments of the present invention. As shown, the electronic device may be a computing device 204.

FIG. 9 is a block diagram illustrating an example operating environment for performing the disclosed methods. This exemplary operating environment is only an example of an operating environment and is not intended to suggest any limitation as to the scope of use or functionality of operating environment architecture. Neither should the operating environment be interpreted as having any dependency or requirement relating to any one or combination of components illustrated in the exemplary operating environment.

The present methods and systems can be operational with numerous other general purpose or special purpose computing system environments or configurations. Examples of well known computing systems, environments, and/or configurations that can be suitable for use with the systems and methods comprise, but are not limited to, personal computers, server computers, laptop devices, and multiprocessor systems. Additional examples comprise machine monitoring systems, programmable consumer electronics, network PCs, minicomputers, mainframe computers, smart meters, smart-grid components, distributed computing environments that comprise any of the above systems or devices, and the like.

The processing of the disclosed methods and systems can be performed by software components. The disclosed systems and methods can be described in the general context of computer-executable instructions, such as program modules, being executed by one or more computers or other devices. Generally, program modules comprise computer code, routines, programs, objects, components, data structures, etc. that perform particular tasks or implement particular abstract data types. The disclosed methods can also be practiced in grid-based and distributed computing environments where tasks are performed by remote processing devices that are linked through a communications network. In a distributed computing environment, program modules can be located in both local and remote computer storage media including memory storage devices.

Further, one skilled in the art will appreciate that the systems and methods disclosed herein can be implemented via a general-purpose computing device 204. The components of the computing device 204 can comprise, but are not limited to, one or more processors or processing units 903, a system memory 912, and a system bus 913 that couples various system components including the processor 903 to the system memory 912. In the case of multiple processing units 903, the system can utilize parallel computing.

The system bus 913 represents one or more of several possible types of bus structures, including a memory bus or memory controller, a peripheral bus, an accelerated graphics port, and a processor or local bus using any of a variety of bus architectures. By way of example, such architectures can comprise an Industry Standard Architecture (ISA) bus, a Micro Channel Architecture (MCA) bus, an Enhanced ISA (EISA) bus, a Video Electronics Standards Association (VESA) local bus, an Accelerated Graphics Port (AGP) bus, and a Peripheral Component Interconnects (PCI), a PCI-Express bus, a Personal Computer Memory Card Industry Association (PCMCIA), Universal Serial Bus (USB) and the like. The bus 913, and all buses specified in this description can also be implemented over a wired or wireless network connection and each of the subsystems, including the processor 903, a mass storage device 904, an operating system 905, biometric identity software 906, biometric identity data 907, a network adapter 908, system memory 912, an Input/Output Interface 910, a display adapter 909, a display device 911, and a human machine interface 902, can be contained within one or more remote computing devices or clients 914a,b,c at physically separate locations, connected through buses of this form, in effect implementing a fully distributed system or distributed architecture.

The computing device 204 typically comprises a variety of computer readable media. Exemplary readable media can be any available media that is non-transitory and accessible by the computing device 204 and comprises, for example and not meant to be limiting, both volatile and non-volatile media, removable and non-removable media. The system memory 912 comprises computer readable media in the form of volatile memory, such as random access memory (RAM), and/or non-volatile memory, such as read only memory (ROM). The system memory 912 typically contains data such as biometric identity data 907 and/or program modules such as operating system 905 and biometric identity software 606 that are immediately accessible to and/or are presently operated on by the processing unit 903.

For example, the memory 912 may store content transmitted from, and/or received by, the computing device 204. Also for example, the memory 912 may store software applications, instructions or the like for the one or more processors 903 to perform steps associated with operation of the entity in accordance with embodiments of the present invention. In particular, the one or more processors 903 may be configured to perform the processes discussed in more detail herein for storing, in a database on the memory 912, biometric identity data 907 comprised of biometric identity information for one or more individuals; receiving, from a biometric information input device 208, input biometric identity information for a user, wherein the biometric information input device is associated with a plurality of electric vehicle charging stations (EVCSs); searching the database for biometric identity information for the one or more individuals that substantially match the input biometric identity information for the user; and authorizing the user to charge an EV's batteries using one of the plurality of EVCS if the input biometric identity information for the user substantially matches biometric identity information for at least one of the one or more individuals in the database.

In another aspect, the computing device 204 can also comprise other non-transitory, removable/non-removable, volatile/non-volatile computer storage media. By way of example, FIG. 9 illustrates a mass storage device 904 that can provide non-volatile storage of computer code, computer readable instructions, data structures, program modules, and other data for the computing device 204. For example and not meant to be limiting, a mass storage device 904 can be a hard disk, a removable magnetic disk, a removable optical disk, magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like.

Optionally, any number of program modules can be stored on the mass storage device 904, including by way of example, an operating system 905 and biometric identity software 906. Each of the operating system 905 and biometric identity software 906 (or some combination thereof) can comprise elements of the programming and the biometric identity software 906. Biometric identity data 907 can also be stored on the mass storage device 904. Biometric identity data 907 can be stored in any of one or more databases known in the art. Examples of such databases comprise, DB2® (IBM Corporation, Armonk, NY), Microsoft® Access, Microsoft® SQL Server, (Microsoft Corporation, Bellevue, Washington), Oracle®, (Oracle Corporation, Redwood Shores, California), mySQL, PostgreSQL, and the like. The databases can be centralized or distributed across multiple systems.

In another aspect, the user can enter commands and information into the computing device 204 via an input device (not shown). Examples of such input devices comprise, but are not limited to, a keyboard, pointing device (*e.g.*, a "mouse"), a microphone, a joystick, a scanner, tactile input devices such as gloves, and other body coverings, and the like These and other input devices can be connected to the processing unit 903 via a human machine interface 902 that is coupled to the system bus 913, but can be connected by other interface and bus structures, such as a parallel port, game port, an IEEE 1394 Port (also known as a Firewire port), a serial port, or a universal serial bus (USB).

In yet another aspect, a display device 911 can also be connected to the system bus 913 via an interface, such as a display adapter 909. It is contemplated that the computing device 204 can have more than one display adapter 909 and the computing device 204 can have more than one display device 911. For example, a display device can be a monitor, an LCD (Liquid Crystal Display), or a projector. In addition to the display device 911, other output peripheral devices can comprise components such as speakers (not shown) and a printer (not shown), which can be connected to the computing device 204 via Input/Output Interface 910. Any step and/or result of the methods can be output in any form to an output device. Such output can be any form of visual representation, including, but not limited to, textual, graphical, animation, audio, tactile, and the like.

The computing device 204 can operate in a networked environment using logical connections to one or more remote computing devices or clients 914a,b,c. By way of example, a remote computing device 914 can be a personal computer, portable computer, a server, a router, a network computer, a vendor or manufacture's computing device, a master station, an electric vehicle charging station (EVCS), peer device or other common network node, and so on. In one aspect, remote computing device 914 can be a third-party computing device such as computing device 302 as shown in FIG. 3. Logical connections between the computing device 204 and a remote computing device or client 914a,b,c can be made via a local area network (LAN) and a general wide area network (WAN). Such network connections can be through a network adapter 908. A network adapter 908 can be implemented in both wired and wireless environments. Such networking environments are conventional and commonplace in offices, enterprise-wide computer networks, intranets, and other networks 915 such as the Internet or an AMI network.

For purposes of illustration, application programs and other executable program components such as the operating system 905 are illustrated herein as discrete blocks, although it is recognized that such programs and components reside at various times in different storage components of the computing device 204, and are executed by the data processor(s) of the computing device 204. An implementation of biometric identity software 906 can be stored on or transmitted across some form of computer readable media. Any of the disclosed methods can be performed by computer readable instructions embodied on computer readable media. Computer readable media can be any available media that can be accessed by a computer. By way of example and not meant to be limiting, computer readable media can comprise "computer storage media" and "communications media." "Computer storage media" comprise volatile and non-volatile, removable and non-removable media implemented in any methods or technology for storage of information such as computer readable instructions, data structures, program modules, or other data. Exemplary computer storage media comprises, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer.

The methods and systems can employ Artificial Intelligence techniques such as machine learning and iterative learning. Examples of such techniques include, but are not limited to, expert systems, case based reasoning, Bayesian networks, behavior based AI, neural networks, fuzzy systems, evolutionary computation (e.g. genetic algorithms), swarm intelligence (e.g. ant algorithms), and hybrid intelligent systems (e.g. Expert inference rules generated through a neural network or production rules from statistical learning).

As described above and as will be appreciated by one skilled in the art, embodiments of the present invention may be configured as a system, method, or computer program product. Accordingly, embodiments of the present invention may be comprised of various means including entirely of hardware, entirely of software, or any combination of software and hardware. Furthermore, embodiments of the present invention may take the form of a computer program product on a computer-readable storage medium having computer-readable program instructions (e.g., computer software) embodied in the storage medium. Any suitable non-transitory computer-readable storage medium may be utilized including hard disks, CD-ROMs, optical storage devices, or magnetic storage devices.

Embodiments of the present invention have been described above with reference to block diagrams and flowchart illustrations of methods, apparatuses (i.e., systems) and computer program products. It will be understood that each block of the block diagrams and flowchart illustrations, and combinations of blocks in the block diagrams and flowchart illustrations, respectively, can be implemented by various means including computer program instructions. These computer program instructions may be loaded onto a general purpose computer, special purpose computer, or other programmable data processing apparatus, such as the one or more processors 704 discussed above with reference to FIG. 7 or the one or more processors 903 discussed above with reference to FIG. 9, to produce a machine, such that the instructions which execute on the computer or other programmable data processing apparatus create a means for implementing the functions specified in the flowchart block or blocks.

These computer program instructions may also be stored in a non-transitory computer-readable memory that can direct a computer or other programmable data processing apparatus (e.g., the one or more processors 704 discussed above with reference to FIG. 7 or the one or more processors 903 discussed above with reference to FIG. 9) to function in a particular manner, such that the instructions stored in the computer-readable memory produce an article of manufacture including computer-readable instructions for implementing the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide steps for implementing the functions specified in the flowchart block or blocks.

Accordingly, blocks of the block diagrams and flowchart illustrations support combinations of means for performing the specified functions, combinations of steps for performing the specified functions and program instruction means for performing the specified functions. It will also be understood that each block of the block diagrams and flowchart illustrations, and combinations of blocks in the block diagrams and flowchart illustrations, can be implemented by special purpose hardware-based computer systems that perform the specified functions or steps, or combinations of special purpose hardware and computer instructions.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; the number or type of embodiments described in the specification.

Throughout this application, various publications may be referenced. The disclosures of these publications in their entireties are hereby incorporated by reference into this application in order to more fully describe the state of the art to which the methods and systems pertain.

Many modifications and other embodiments of the inventions set forth herein will come to mind to one skilled in the art to which these embodiments of the invention pertain having the benefit of the teachings presented in the foregoing descriptions and the associated drawings. Therefore, it is to be understood that the embodiments of the invention are not to be limited to the specific embodiments disclosed and that modifications and other embodiments are intended to be included within the scope of the appended claims. Moreover, although the foregoing descriptions and the associated drawings describe embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method of authorizing charging an electric vehicle's (EV's) batteries using a master station (402, 502) operably connected with a plurality of electric vehicle charging stations (EVCS) (404) comprising:
storing, in a database, biometric identity information for one or more individuals;
receiving, from a biometric information input device (108) located in a master station (402, 502), input biometric identity information for a user (106), wherein the biometric information input device (108) is associated with a plurality of electric vehicle charging stations (EVCSs) (404);
searching the database, using a processor (704, 903), for biometric identity information for the one or more individuals that substantially match the input biometric identity information for the user (106); and
authorizing the user (106) to charge an electric vehicle's (EV's) batteries using one of the plurality of EVCS (404) if the input biometric identity information for the user (106) substantially matches biometric identity information for at least one of the one or more individuals in the database.

2. The method of Claim 1, further comprising
receiving electrical consumption information related to the user (106) charging the EV's batteries using the one of the plurality of EVCS (404); and
billing the user (106) for the electrical consumption.

3. The method of Claim 2, wherein billing the user (106) for the electrical consumption comprises including a cost for the electrical consumption on a third-party invoice (304).

4. The method of Claim 1, 2 or 3, wherein storing, in the database, biometric identity information for one or more individuals comprises storing the biometric identity information in the database in a memory device (706) located within the master station (402), and wherein searching the database, using the processor (404), for biometric identity information for the one or more individuals that substantially match the input biometric identity information for the user (106) preferably comprises searching the database using the processor (404) located within the master station (402).

5. The method of any one of Claims 1 to 4, wherein storing, in the database, biometric identity information for one or more individuals comprises storing biometric identity information in the database in a memory device (912) located separate from the master station (502), and wherein searching the database, using the processor (903), for biometric identity information for the one or more individuals that matches the input biometric identity information for the user (106) preferably comprises searching the database using the processor (903) that is separate from the master station (502), wherein the input biometric identity information is transferred to the processor (903) over a network (206).

6. The method of any one of Claims 1 to 5, wherein storing, in the database, biometric identity information for one or more individuals comprises storing in the database one or more of fingerprint data, palm data, hand geometry data, retinal data, iris data, voice data, DNA information or face recognition data for the one or more individuals.

7. The method of any one of Claims 1 to 6, wherein receiving, from the biometric information input device associated with the EVCS, input biometric identity information for a user, comprises receiving the input biometric identity information for the user (106) from one or more of a fingerprint reader, a palm reader, a hand geometry reader, a retinal scanner, an iris scanner, a voice recorder, a DNA reader that preferably reads DNA information from a DNA card, or a face scanner.

8. The method of any one of Claims 1 to 7, wherein receiving, from the biometric information input device (108) associated with the EVCS (404), input biometric identity information for the user (106) comprises receiving from the biometric information input device (108) one or more of fingerprint data, palm data, hand geometry data, retinal data, iris data, voice data, DNA information or face recognition data for the user.

9. The method of any one of Claims 1 to 8, wherein authorizing the user to charge the electric vehicle's (EV's) batteries using one of the plurality of EVCS if the input biometric identity information for the user (106) substantially matches biometric identity information for at least one of the one or more individuals in the database comprises actuating a switch that electrically connects one of the plurality of EVCS to the batteries of the EV, wherein preferably the switch disconnects the electrical connection between one of the plurality of EVCS and the EV (102) when at least one of the batteries reach a predetermined level of charge, a defined period of time has elapsed, the user disconnects the one of the plurality of EVCS from the EV, a defined amount of electrical energy has been consumed by the batteries of the EV, or a predetermined cost is reached for the electrical energy consumed by the batteries of the EV.

10. A system for charging an electric vehicle's (102) batteries comprised of:
a master station (402, 502) and a plurality of electric vehicle charging stations (EVCSs) (404) operably connected with the master station (402, 502), wherein the master station (402, 502) is comprised of:
a biometric information input device (108), wherein the biometric information input device (108) is associated with the plurality of electric vehicle charging stations (EVCSs) (404);
at least one memory device (706, 912), wherein the memory device (706, 912) comprises a database residing thereon;
an EVCS identity device (406), wherein a user (106) can specify one of the plurality of EVCS (404) for charging an electric vehicle's (EV's) (102) batteries; and
a processor (704, 903) operably connected with biometric information input device (108), EVCS identity device (406) and the memory device (706, 912), wherein the processor (704, 903) is configured to perform the method of any one of Claims 1 to 9.

11. The system of Claim 10, wherein the memory device is within the master station and the processor (704, 903) is configured to store, in the database, biometric identity information for one or more individuals comprises storing the biometric identity information in the database in the memory device located within the master station, wherein preferably the processor (704, 903) is within the master station and the processor is configured to search the database for biometric identity information for the one or more individuals that substantially match the input biometric identity information for the user (106) comprises searching the database using the processor located within the master station.

12. The system of Claim 10, wherein the memory device is located separate from the master station and storing, in the database, biometric identity information for one or more individuals comprises storing biometric identity information in the database in the memory device located separate from the master station, the system preferably further comprising a network, wherein the processor is configured to search the database for biometric identity information for the one or more individuals that matches the input biometric identity information for the user (106) comprises searching the database using the processor that is separate from the master station, wherein the input biometric identity information is transferred to the processor over the network.

13. The system of Claim 10, 11 or 12, wherein the processor (704, 903) is configured to cause the switch of the specified EVCS to electrically disconnect the electrical connection between the source of electrical energy and the EV's batteries when at least one of the following occurs: the batteries reach a predetermined level of charge, a defined period of time has elapsed, the user disconnects the electrical source of energy from the EV, a defined amount of electrical energy has been consumed by the batteries of the EV, or a predetermined cost is reached for the electrical energy consumed by the batteries of the EV (102).

14. A master station (402) for an electric vehicle charging station (EVCS) system comprised of:
a biometric information input device (108);
at least one memory device (706), wherein the memory device (706) comprises a database residing thereon;
an EVCS identity device (406), wherein a user (106) can specify one of a plurality of EVCS (404) operably connected with the master station (402) for charging an electric vehicle's (EV's) (102) batteries;
a network interface (712); and
a processor(704), wherein the processor (704) is operably connected with biometric information input device (108), the at least one memory device (706), the EVCS identity device (406), and the network interface (712), and wherein the processor (704) is configured to:
store, in the database on the memory device (706), biometric identity information for one or more individuals;
receive, from the biometric information input device (108), input biometric identity information for a user (106);
receive, from the EVCS identity device (406), information that specifies one of the plurality of EVCS (404);
search the database for biometric identity information for the one or more individuals that substantially match the input biometric identity information for the user (106);
authorize the user (106) to charge the EV's (102) batteries using the specified one of the plurality of EVCS (404) if the input biometric identity information for the user (106) substantially matches biometric identity information for at least one of the one or more individuals in the database, wherein authorizing the user (106) to charge the EV's (102) batteries using the specified one of the plurality of EVCS (404) if the input biometric identity information for the user (106) substantially matches biometric identity information for at least one of the one or more individuals in the database comprises actuating a switch (408) in the specified one of the plurality of EVCS (404) that electrically connects a source of electrical energy (110) to the batteries of the EV (102);
receive electrical consumption information related to the user (106) charging the EV's (102) batteries using the source of electrical energy (110);
transmit the electrical consumption information over a network (206) using the network interface (712) to cause the user (106) to be billed for the electrical consumption; and
cause the switch (408) in the specified one of the plurality of EVCS (404) to electrically disconnect the electrical connection between the source of electrical energy (110) and the EV's (102) batteries when at least one of the following occurs: the batteries reach a predetermined level of charge, a defined period of time has elapsed, the user (106) disconnects the electrical source of energy (110) from the EV (102), a defined amount of electrical energy has been consumed by the batteries of the EV (102), or a predetermined cost is reached for the electrical energy consumed by the batteries of the EV (102).
